Europäisches Patentamt

European Patent Office

Office européen des brevets

(19)

(11) Publication number: **0 070 516**
**A2**

## EUROPEAN PATENT APPLICATION

(12)

(21) Application number: 82106313.8

(22) Date of filing: 14.07.82

(51) Int. Cl.³: **B 62 K 19/34**

(30) Priority: 21.07.81 JP 112964/81
04.03.82 JP 29557/82 U

(71) Applicant: MORI MANUFACTURING CO., LTD., 2-12-10, Sekihara, Adachi-ku Tokyo 123 (JP)

(72) Inventor: Mori, Masami, 1-16-18, Nishi-arai, Adachi-ku Tokyo (JP)
Inventor: Mori, Katsuharu, No. 403, 3-32-6, Umejima, Adachi-ku, Tokyo (JP)

(43) Date of publication of application: 26.01.83
Bulletin 83/4

(74) Representative: Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 43, D-8000 München 22 (DE)

(84) Designated Contracting States: BE DE FR GB IT NL

(54) **Bicycle crankshaft assembly.**

(57) A crankshaft assembly for use in a manpowered vehicle such as a bicycle and tricycle including a self-adjusting mechanism is provided. The self-adjusting mechanism includes a pusher member slidably mounted on a crankshaft and biasing means, preferably a coil spring, for urging the pusher member against balls in the direction along the rotating axis of the crankshaft. Provision of such a self-adjusting mechanism allows to provide a maintenance-free crankshaft assembly, which is excellent in performance and easy to manufacture.

DR. SCHUMANN · JAKOB · DR. BEZOLD · MEISTER
HILGERS · DR. MEYER · PLATH

## BICYCLE CRANKSHAFT ASSEMBLY

### BACKGROUND OF THE INVENTION

1. Field of the Invention

This invention relates to a crankshaft assembly for use in a man-powered vehicle such as a bicycle and tricycle and in particular to a crankshaft assembly to be incorporated into the bottom bracket of a bicycle frame.

2. Description of the Prior Art

A bicycle frame comprises a bottom bracket at its downmost section where its down tube, sheet tube and a pair of back stays meet. A crankshaft assembly is provided in the bottom bracket such that a crankshaft extends through the bottom bracket and is rotatable around its longitudinal center axis. A pair of cranks each provided with a pedal at its free end is fixed to the opposite ends of the crankshaft. Thus, when the bicycle rider pedals, the crankshaft is rotated to transmit driving power to the rear wheel through a transmission mechanism including a chain wheel and chain.

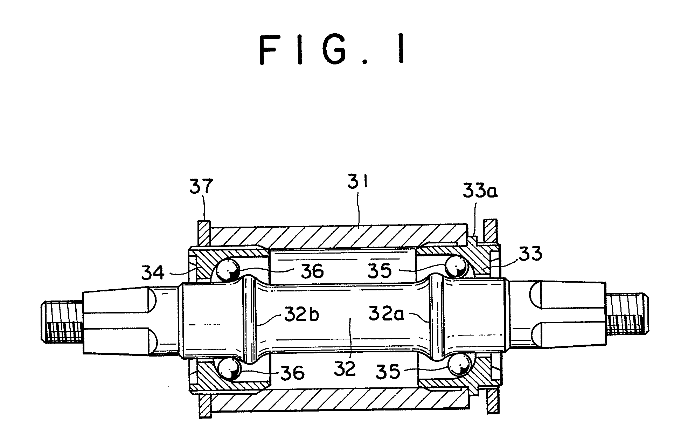

Fig. 1 shows in cross-section a typical prior art bottom bracket or crankshaft assembly of a bicycle. As shown, the assembly includes a hunger pipe 31, which also constitutes a part of a bicycle frame, and a crankshaft 32, extending through and concentric with the pipe 31. The crankshaft 32 is provided with a pair of ridges 32a, 32b, spaced apart from each other over a predetermined distance and each extending in the circumferential direction. On the other hand, a right ball retainer 33 is partially screwed into one end of the pipe 31 and a left ball retainer 34 is also partially screwed into the opposite end of the pipe 31. And, a set of balls 35 are held in rolling contact between the ball retainer 33 and the crankshaft 32 and another set of balls 36 between the ball retainer 34 and the crankshaft 32, so that the crankshaft 32 is supported to be rotatable around its longitudinal center axis.

It is to be noted that the balls 35 and 36 are confined between the specifically shaped ball retaining surface of the ball retainers 33 and 34 and the ridges 32a and 32b, respectively. And, therefore, the axial movement of the crankshaft 32 relative to the pipe 31 is restrained. As shown in Fig. 1, the right ball retainer 33 is integrally provided with a lug 33a at its outer peripheral surface;

thus, when assembled, the right ball retainer 33 is screwed into the pipe 31 until the lug 33a comes into abutment against the end of the pipe 31. Accordingly, the lug 33a determines the relative position between the pipe 31 and the retainer 33. No such a lug is provided in the left ball retainer 34. Instead, provision is made of a stopper ring 37 which may be screwed onto the outer surface of the retainer 34. Due to a double nut structure formed by the pipe 31 and the stopper ring 37, the retainer 34 may be adjustably fixed to the pipe 31.

With the above-described structure, the resistance to the rotation of the crankshaft 32 varies depending upon the position of the left ball retainer 34 relative to the pipe 31 because the forces applied to the balls 35 between the retainer 33 and the ridge 32a and the balls 36 between the retainer 34 and the ridge 32b vary depending upon the relative positional relationship between the retainer 34 and the pipe 31. This indicates the fact that adjustment in relative position between the retainer 34 and the pipe 31 is critical, which requires experience as well as skills; moreover, performance may differ from one product from another.

When the structure shown in Fig. 1 is newly assembled, the position of the retainer 34 is commonly set such that the whole assembly is tightened at a somewhat higher level. However, as the crankshaft 32 is rotated, those portions of the retainers 33, 34 and the crankshaft 32, particularly its ridges 32a, 32b, which are in pressure contact with the balls 35, 36 gradually wear thereby causing wandering motion of the crankshaft 32, which is undesired. Under the condition, the retainer 34 must be readjusted in position, i.e.,

retightening of the retainer 34 is required poriodically.

This implies that a rather complicated maintenance is required for the prior art crankshaft assembly.

SUMMARY OF THE INVENTION

The disadvantages of the prior art are overcome with the present invention and an improved crankshaft assembly for use in a manpowered vehicle such as a bicycle and tricycle is herein provided. In accordance with the present invention, a crankshaft is rotatably supported by a predetermined number of balls arranged along the circumference of the crankshaft and retained by a ball retainer, which is held at a fixed position, for example, by the hunger pipe of a bottom bracket. Preferably, the ball retainer is generally in the shape of a cylinder having an inwardly curved inner surface because the balls may be easily confined in rolling contact by pressing them against the inwardly curved inner surface. A pusher member generally in the shape of a ring is slidably fitted onto the crankshaft and resilient means is provided to bias the pusher member toward the ball retainer thereby maintaining the balls pressed against and in rolling contact with the ball retainer, particularly its inwardly curved inner surface in a preferred mode.

Preferably, the pusher member has an integral sleeve section extending along the rotating axis of the crankshaft thereby defining an outwardly curved outer surface generally opposite to the inwardly curved inner surface of the ball retainer. In this case, the balls may be held in rolling contact between the outwardly curved outer and inwardly curved inner surfaces. It is also preferable to provide a structure in which the pusher member rotates integrally with the crankshaft. For example, an appropriate number of flat areas may be provided along the circumference of the crankshaft with the inner surface of the pusher member correspondingly configured. However, a clearance is desired between the pusher member and the crankshaft for easy assemblage.

The resilient member is preferably comprised of a coil spring having one end portion engaged with the crankshaft and the other end portion engaged with the pusher member. With such a structure, the recovery force of the coil spring insures that the balls are properly pressed against the ball retainer at all times. Another advantage in using a coil spring is that the loosely fitted pusher member may also be biased circumferentially thereby insuring unity between the crankshaft and the pusher member to provide improved operability.

In accordance with one aspect of the present invention, there is provided a crankshaft assembly for use in a manpowered vehicle such as a bicycle and tricycle comprising: a crankshaft adapted to be rotated by the application of manpower; first supporting means for rotatably supporting said crankshaft; second supporting means for rotatably supporting said crankshaft at a location apart from said first supporting means along the rotating axis of said crankshaft; third supporting means for fixedly supporting said first and second supporting means with a predetermined distance therebetween; and adjusting means for automatically adjusting at least one of said first and second supporting means when said assembly is in use thereby allowing to maintain the degree of tightening of said crankshaft substantially at a desired level at all times.

In accordance with another aspect of the present invention, there is provided a crankshaft assembly for use in a manpowered vehicle such as a bicycle and tricycle comprising: a crankshaft provided with a first engaging section; at least one ball retainer generally in the shape of a cylinder and having an inwardly curved inner surface; means for holding said ball retainer at a fixed position; a prederemined number of balls arranged circumferentially around said crankshaft in rolling contact with said inwardly curved inner surface of said ball retainer; a pusher member generally in the shape of a ring, said pusher member being slidably fitted onto said crankshaft and having a pushing surface which may be brought into rolling contact with said balls, said pusher member being provided with a second engaging section; and a coil spring having one end portion engaged with said first engaging section and the other end portion engaged with said second engaging section whereby the recovery force of said coil spring urges said balls against the inwardly curved inner surface of said ball retainer through said pusher member.

It is therefore an object of the present invention to provide an improved crankshaft assembly for use in a manpowered vehicle such as a bicycle and tricycle.

Another object of the present invention is to provide a self-adjusting type crankshaft assembly.

A further object of the present invention is to provide a crankshaft assembly in which the resistance to the rotation of a crankshaft is maintained substantially at constant.

A still further object of the present invention is to provide a maintenance-free crankshaft assembly which has a long servicelife and provides consistence performance.

A still further object of the present invention is to provide a crankshaft assembly which can be easily assembled without experience and skills.

Other objects, advantages and novel features of the present invention will become apparent from the following detailed description of the invention when considered in conjunction with the accompanying drawings.

BRIEF DESCRIPTION OF THE DRAWINGS

Fig. 1 is a cross-sectional view showing a typical prior art crankshaft assembly;

Fig.2 is a cross-sectional view showing one embodiment of the present invention;

Fig. 3 is a cross-sectional view showing another embodiment of the present invention;

Fig. 4 is a schematic illustration showing main elements of the embodiment shown in Fig. 2;

Fig. 5 is a cross-sectional view taken along II(B)-II(B) line in Fig. 4;

Fig. 6 is a schematic illustration showing a further embodiment of the present invention;

Fig. 7 is a cross-sectional view taken along IV(B)-IV(B) line in Fig. 6; and

Figs. 8 through 10 are schematic illustrations on an enlarged scale showing several modifications for improving circumferential biasing of the pusher member 7.

DESCRIPTION OF THE PREFERRED INBODIMENTS

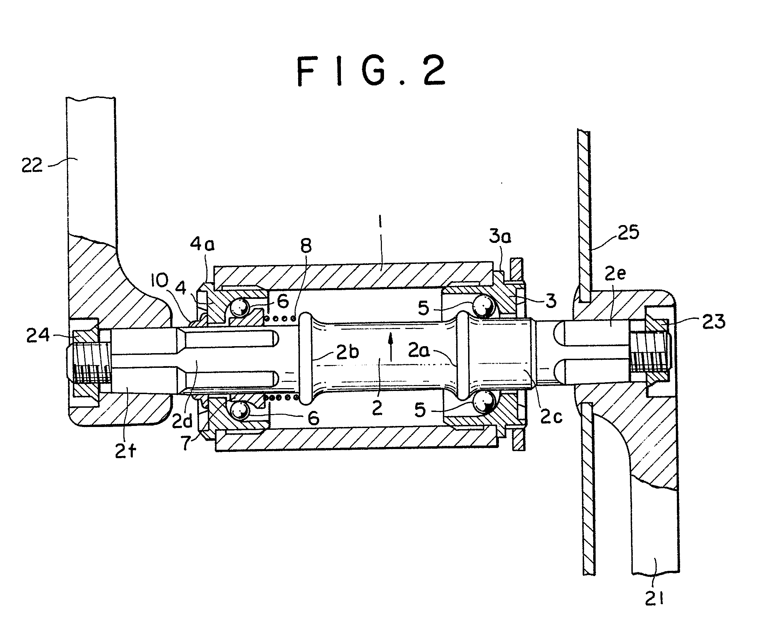

Referring now to Fig. 2, there is shown one embodiment of the present invention comprising a hunger pipe 1 which may be a part of the bottom bracket of a bicycle frame. A crankshaft 2 is provided concentrically in the pipe 1 extending therethrough, and it is provided with a pair of ridges 2a and 2b extending circumferentially around the crankshaft 2 and several defined sections 2c, 2d, 2e and 2f. The ridge 2a has a function of restraining the movement of balls 5 along the rotating direction of the crankshaft 2 and the ball receiving section 2c is provided to the right of and contiguous to the ridge 2a. Further to the right of the ball receiving section 2c is provided the right crank mounting section 2e on which a right crank 21 may be fixedly mounted by means of a nut 23 tightly screwed onto the threaded right end portion of the crankshaft 2. As shown, the mounting section 2e is provided with an appropriate number of flat areas and

0070516

the crank 21 is provided with a mating through-hole which is shaped correspondingly with the contour of the mounting section 2e.

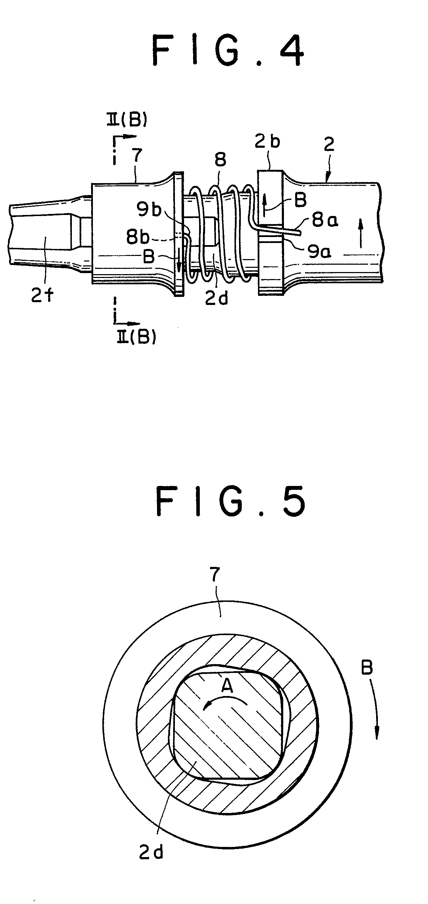

To the left of the ridge 2b, which has a function of holding one end portion of a coil spring 8 fitted onto the crankshaft 2, is provided the adjusting section 2d where adjustment takes place automatically to maintain a proper performance of the assembly even if some parts are worn. Further to the left along the rotating axis of the crankshaft 2 is provided the left crank mounting section 2f on which a left crank 22 is fixedly mounted by means of a nut 24. It is to be noted that, in the adjusting section 2d, four flat areas are provided symmetrically along the circumference of the crankshaft 2, as best shown in Fig. 5 in transverse cross-section on an enlarged scale.

A pusher member 7 is loosely fitted onto the adjusting section 2d of the crankshaft 2. The pusher member 7 is generally in the form of a ring and it includes a sleeve section extending in the direction along the rotating axis of the crankshaft 2 over a predetermined length. It is to be noted, however, that the pusher member 7 has a circular outer circumference gradually increasing in diameter to the right thereby defining an outwardly curved outer surface as the surface for receiving balls 6.

The inner peripheral surface of the pusher member 7 is provided with four flat areas thereby defining an inner circumferential shape similar to but somewhat larger in size than the cross-sectional shape of the adjusting section 2e, as best shown Fig. 5. As a result, the pusher member 7 is slidable along the rotating axis of the crankshaft 2 but it is restrained to rotate together with the crankshaft 2. However, since there exists a defined clearance between the pusher member 7 and the adjusting section 2d mainly for the purpose of easy assemblage and smooth sliding motion, the pusher member 7 may rotate over a small angle relative to the crankshaft 2. As will be described later, the other end portion of the coil spring 8 is securely held by the pusher member 7.

A pair of ball retainers 3 and 4 is provided as screwed into opposite ends of the pipe 1. It is to be noted that the right ball retainer 3 has a left-hand male thread on its outer periphery which may be screwed into the left-hand female screw formed at the right end portion of the inner peripheral surface of the pipe 1. Similarly, the left ball retainer 4 has a right-hand male thread and the left end of the pipe 1 is provided with a corresponding right-hand female thread. With the above described structure, either of the ball retainers 3 and 4 is prevented from being loosened owing to the operation of the present assembly.

As shown, the ball retainer 3 or 4 is generally in the shape of a cylinder, but it has a bottom-opened, cup-shaped inner configuration. In other words, the inner peripheral surface of the right ball retainer 3 is inwardly curved to the right with the inner diameter gradually decreasing, so that the inner surface defines a ball retaining surface which retains the balls 5 in position in cooperation with the ridge 2a and the ball receiving section 2c. The balls 5 are provided with an appropriate number, typically ten, and they are disposed along the annular space defined between the ball retainer 3 and the crankshaft 2 in rolling contact therewith. The ball retainer 3 has an integrally provided lug 3a projecting radially from its outer surface. In assemblage, the lug 3a is brought into contact with the right end of the pipe 1.

The left ball retainer 4 has a similar structure and it has an inwardly curved inner peripheral surface with its inner diameter gradually decreasing to the left. The ball retainer 4 is also provided with an integral lug 4a which extends radially outwardly from its outer surface. The ball retainer 4 is screwed into the pipe 1 until the lug 4a comes into abutment against the left end of the pipe 1. Now that the coil spring 8 is provided between the ridge 2b and the slidable pusher member 7 thereby normally urging the pusher member 7 to the left, the balls 6 are held in rolling contact under pressure between the ball retainer 4 and the pusher member 7. Alternatively, it may be so structured that the balls 6 are held in rolling contact between the retainer 4 and the crankshaft 2. In this case, however, that portion of the crankshaft 2 where the balls 6 roll should be smooth, and it preferably has the structure similar to the ball receiving section 2c, i.e., a circular circumference. As may have already been appreciated, provision of the pusher member 7 along with the coil spring 8 allows to absorb any inadequate gap or clearance which is usually formed by wear of parts, thereby insuring a proper performance of the assembly at all times.

Fis. 4 shows in detail the relationship among the crankshaft 2, pusher member 7 and coil spring 8. As shown, the ridge 2b is provided with a notch or recess 9a extending along the rotating axis of the crankshaft 2, and the right end portion 8a of the coil spring 8, which is bent to extend substantially in parallel with the rotating axis of the crankshaft 2, is placed in the recess 9a. On the other hand, the coil spring 8 has a left end portion 8b which is similarly bent to extend substantially in paralell with the rotating axis of the crankshaft 2 and is inserted into a hole 9b provided in the pusher member 7. The recovery force of the coil spring 8 urges the pusher member 7 to the left relative to the crankshaft 2, so that the balls 5 and 6 may be properly set in rolling contact under pressure with the respective retaining and receiving surfaces. Most preferably, however, the coil spring 8 urges the pusher member 7 circumferentially in the direction B relative to the crankshaft 2. With such a structure, no clearance exists between the crankshaft 2 and the pusher member 7 with respect to the forward or driven direction A of the crankshaft 2 thereby insuring a smoother operation at the initial step for driving to rotate the crankshaft 2 by pedaling.

Referring back to Fig. 2, as previously mentioned, the crank 21 is fixed to the right end of the crankshaft 2 by means of the nut 23 and the crank 22 is similarly fixed to the left end of the crankshaft 2 by means of the nut 24. Moreover, a chain wheel 25 is fixed to the crank 21 around a part of which extends an endless chain which also extends partly around a gear fixed to the rear wheel (not shown) of a bicycle. Thus, the driving power generated by rotating the crankshaft 2 by pedaling is transmitted to the rear wheel to move the bicycle forward.

In order to move the bicycle forward, the crankshaft 2 must be driven to rotate in a predetermined direction. That is, the crankshaft 2 must be rotated clockwise when viewed from the right, or counter-clockwise when viewed from the left. Now, viewing from the right, when the crankshaft 2 is driven to rotate clockwise, which is the normal and forward direction, the right ball retainer 3 receives a force tending to rotate counter-clockwise through the balls 5, and, therefore, the ball retainer 3 has a left-hand male thread at its outer periphery in order to keep the ball retainer 3 properly secured to the pipe 1. On the other hand, viewing from the left, when the crankshaft 2 rotates in the forward or counter-clockwise direction, the left ball retainer 4 is forced to rotate clockwise owing to the rolling motion of the balls 6, and, thus, the ball retainer 4 is provided with a right-hand male thread at its outer periphery. In this manner, the ball retainers 3 and 4 are prevented from being loosened while the assembly is in normal operation. A ring nut 3b for fixing a case which partly encloses the gear wheel 25 is screwed onto the right end portion of the ball retainer 3. Moreover, a seal 10 is tightly fitted onto the crankshaft 2 in contact with the left end surface of the left ball retainer 4.

Such components as ball retainers 3, 4, pusher member 7 and crankshaft 2 may preferably be formed by cold-forging a steel material having the carbon concentration of approximately 0.12% and then subjecting the forged structure to a surface-hardening process.

As described above, in accordance with the present invention, even if wear is produced at the rolling contact portion, it can be automatically compensated and no adjusting operation is required. Moreover, the assembling process is greatly facilitated because the ball retainers 3, 4 may be screwed into the pipe 1 from opposite ends until their lugs 3a, 4a come into abutment against the respective ends of the pipe 1. In the prior art, positioning of the left ball retainer 34 with respect to the crankshaft 32 has been extremely difficult, requiring experience and skills.

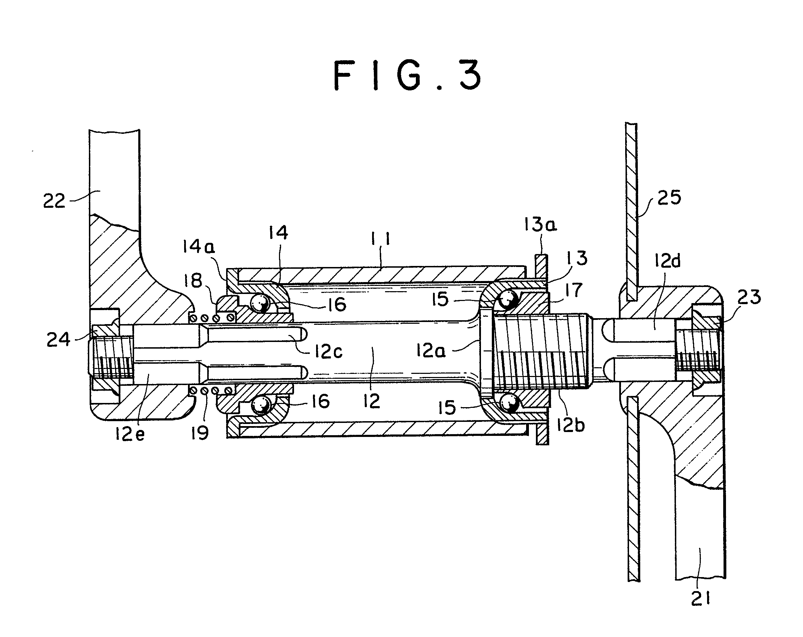

Referring now to Fig. 3, there is shown another embodiment of the present invention. As shown, similarly with the crankshaft 2 of the previous embodiment, a crankshaft 12 is provided with a pair of crank mounting sections 12d and 12e at opposite ends, on which the cranks 21 and 22 are fixedly mounted, respectively. The crankshaft 12 is also provided with a ridge 12a and a threaded section 12b between the ridge 12a and the mounting section 12d. Furthermore, the crankshaft 12 is provided with an adjusting section 12c contiguous with the crank mounting section 12e.

There is also provided a right ball retainer 13 having a left-hand male thread on its outer surface which may be screwed into the pipe 11. A stopper ring 13a for a gear case is also screwed onto the retainer 13. A ball receiving member 17 is screwed onto the threaded section 12b until its forward end abuts against the ridge 12a, and a predetermined number of balls 15 are held in rolling contact between the inwardly curved inner surface of the ball retainer 13 and the outwardly curved outer surface of the receiving member 17.

On the other hand, a left ball retainer 14 is provided with a right-hand male thread which is screwed into the left end portion of the pipe 11 until its lug 14a comes into abutment against the left end of the pipe 11. A pusher member 18 is slidably fitted onto the adjusting section 12c of the crankshaft 2 and a coil spring 19 is also fitted onto the crankshaft 2 extending between the base of the crank 22 and the pusher member 18. Accordingly, the pusher member 18 is normally biased toward right and thus the balls 16 are normally held in rolling contact under pressure between the pusher member 18 and the left ball retainer 14. The embodiment of Fig. 3 allows to obtain substantially the same advantages as those obtained by the previous embodiment of Fig. 2.

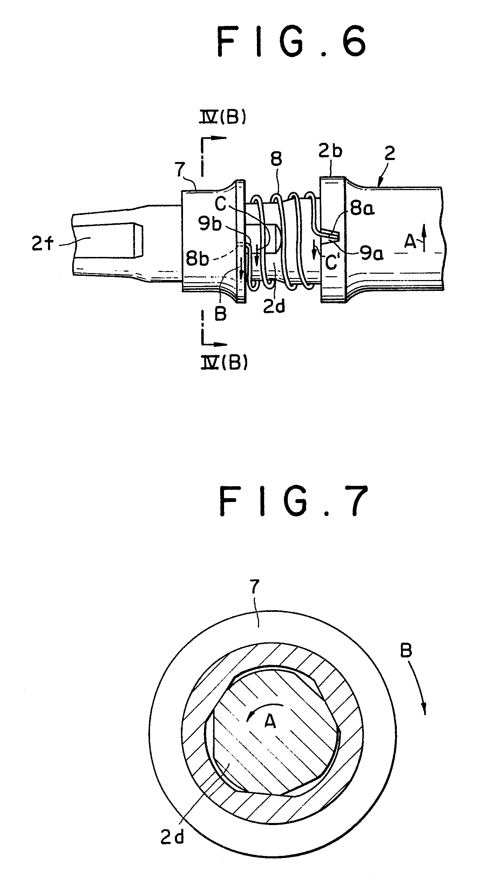

Referring to Figs. 6 and 7, a description will be made as to a further modification of the present invention. In the previous embodiment of Fig. 4, the recess 9a for receiving the bent portion 8a of the coil spring 8 should be wide enough for the bent portion 8a to be easily inserted. When the coil spring 8 is compressed, it has a tendency to move the bent portions 8a and 8b away from each other as indicated by the arrows B, and this uncoiling characteristic may be utilized to circumferentially bias the pusher member 7 with respect to the crankshaft 2. However, the degree of such uncoiling shift is rather small and the recess 9a and the hole 8b for that matter must be made large enough for easy insertion of the respective bent portions 8a and 8b, and, therefore, it is preferable to provide a particularly structured relationship between the bent portion 8a(8b) and the recess 9a(hole 9b) to insure circumferential biasing of the pusher member 7 in view of the above.

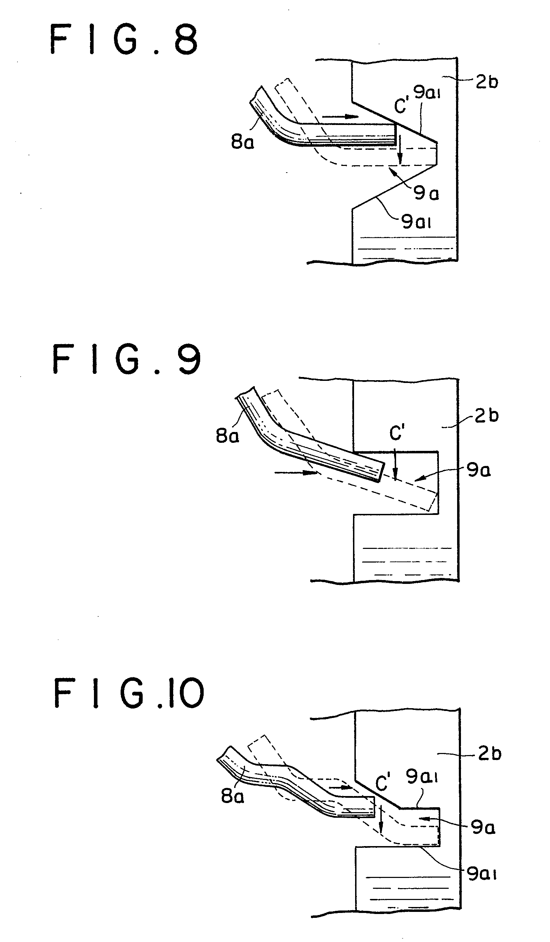

In the embodiment shown in Fig. 6, the recess 9a is structured to be convergent in width, i.e., decreasing in width from left to right, and the bent portion 8a extends substantially in parallel with the rotating axis of the crankshaft 2. Fig. 8 shows the main part on an enlarged scale of the embodiment of Fig. 6. As shown, when assembling, the pusher member 7 is slidingly brought closer to the ridge 2b against the force of the coil spring 8. Thus, the end of the bent portion 8a slides along the inclined wall $9a_1$, so that the coil 8 as a whole tends to rotate in the counter-clockwise direction as indicated by C' with respect to the crankshaft 2. As a result, the pusher member 7 becomes resiliently biased in the circumferential direction with respect to the crankshaft 2 as desired.

Fig. 9 illustrates a further modification in which the bent portion 8a extends obliquely with respect to the rotating axis of the crankshaft 2 and the walls of the recess 9a extend substantially in parallel with the rotating axis of the crankshaft 2. Under the condition, when the bent portion 8a is pushed into the recess 9a until its end reaches the bottom of the recess, as indicated by the dotted line, the coil spring 8 as a whole is rotated counter-clockwise as indicated by the arrow C' with respect to the crankshaft 2. Thus, the similar effect as that of Fig. 8 may also be obtained.

Fig. 10 illustrates a still further modification which is basically a combination of the two examples shown in Figs. 8 and 9. It should be noted that a similar idea may be equally applied to the engagement between the other bent portion 8b and the hole 9b.

Fig. 7 shows a modification of the fitting condition between the pusher member 7 and the adjusting section 2d of the crankshaft 2. In this embodiment, three flat areas are provided along the circumference of the adjusting section 2d arranged symmetrically with respect to the rotating axis of the crankshaft 2. The inner circumference of the pusher member 7 is correspondingly defined with somewhat larger in size for allowing smooth sliding motion and easy assembling operation. This structure is preferred because only three contact points or lines are needed to securely fix the pusher member 7 against the crankshaft 2. For example, in the case of the structure shown in Fig. 5, it is rather difficult to manufacture the adjusting section 2d such that all of the four corners of the adjusting section 2d may come into contact with the inner surface of the pusher member 7. That is, it is often the case that one corner of the adjusting section 2d is not in contact with the inner surface of the pusher member 7 along its entire length. If so, there is formed an inadequate clearance and the pusher member 7 would move relative to the crankshaft 2 during operation. On the other hand, no such problem would arise if a three contact point method is used as in the case of Fig. 7.

While the above provides a full and complete disclosure of the preferred embodiments of the present

0070516

invention, various modifications, alternate constructions and equivalents may be employed without departing from the true spirit and scope of the invention. Therefore, the above description and illustration should not be construed as limiting the scope of the invention, which is defined by the appended claims.

WHAT IS CLAIMED IS:

1. A crankshaft assembly for use in a manpowered vehicle such as a bicycle and tricycle comprising:

a crankshaft adapted to be rotated by the application of manpower;

first supporting means for rotatably supporting said crankshaft;

second supporting means for rotatably supporting said crankshaft at a location apart from said first supporting means along the rotating axis of said crankshaft;

third supporting means for fixedly supporting said first and second supporting means with a predetermined distance therebetween; and

adjusting means for automatically adjusting at least one of said first and second supporting means when said assembly is in use thereby allowing to maintain the degree of tightening of said crankshaft substantially at a desired level at all times.

2. The crankshaft assembly of Cliam 1 wherein said adjusting means includes a resilient member which always applies a resilient force to at least either one or both of said first and second supporting means.

- 22 -

0070516

3.  The crankshaft assembly of Claim 1 or 2 wherein said third supporting means includes a pipe having a predetermined diameter and length.

4.  The crankshaft assembly of Claim 3 wherein said first supporting means includes a first ball retainer fixedly mounted at one end of said pipe and a predetermined number of balls retained between said first ball retainer and said crankshaft, and said second supporting means includes a second ball retainer fixedly mounted at the other end of said pipe and a predetermined number of balls retained between said second ball retainer and said crankshaft.

5.  The crankshaft assembly of Claim 4 wherein said adjusting means further includes a pusher member generally in the form of a ring slidably fitted onto said crankshaft, said pusher ring being always pressed against the balls of either one of said first and second supporting means by said resilient member.

6.  The crankshaft assembly of Claim 5 wherein said pusher member is so structured to rotate together with said crankshaft and said pusher ring includes a sleeve section extending along the longitudinal axis of said crankshaft over a predetermined distance whereby said balls are held in rolling contact between said pusher ring and either one of said first and second ball retainers.

7. The crankshaft assembly of Claim 6 wherein said crankshaft has an irregularly shaped section which is not circular in cross-section at least a part along its longitudinal axis and said pusher member has a correspondingly irregularly shaped inner contour.

8. The crankshaft assembly of Claim 7 wherein said irregularly shaped section is formed by providing at least one flat area in the outer peripheral surface of said crankshaft.

9. The crankshaft assembly of Claim 8 wherein three such flat areas are provided in a symmetrical arrangement with respect to the rotating axis of said crankshaft.

10. The crankshaft assembly of Claim 5 or 6 wherein said resilient member is a coil spring fitted onto said crankshaft with one end portion engaged with said pusher member with the other end portion engaged with said crankshaft.

11. The crankshaft assembly of Claim 4 wherein each of said first and second ball retainers has an integral lug extending radially outwardly from its outer peripheral surface whereby said first and second ball retainers are fixedly mounted to said pipe by bringing the lugs in abutment against the respective ends of said pipe.

12. A crankshaft assembly for use in a manpowered vehicle such as a bicycle and tricycle comprising:

a crankshaft provided with a first engaging section;

at least one ball retainer generally in the shape of a cylinder and having an inwardly curved inner surface;

means for holding said ball retainer at a fixed position;

a predetermined number of balls arranged circumferentially around said crankshaft in rolling contact with said inwardly curved inner surface of said ball retainer;

a pusher member generally in the shape of a ring, said pusher member being slidably fitted onto said cranksahft and having a pushing surface which may be brought into rolling contact with said balls, said pusher member being provided with a second engaging section; and

a coil spring having one end portion engaged with said first engaging section and the other end portion engaged with said second engaging section whereby the recovery force of said coil spring urges said balls against the inwardly curved inner surface of said ball retainer through said pusher member.

13. The crankshaft assembly of Claim 12 wherein said pusher member includes an integral sleeve section extending along the rotating axis of said crankshaft thereby defining an outwardly curved outer surface whereby said predetermined number of balls are retained in rolling contact between said inwardly curved inner surface of said ball retainer and said outwardly curved outer surface of said pusher member.

14. The crankshaft assembly of Claim 13 wherein said pusher member rotates together with said crankshaft.

15. The crankshaft assembly of Claim 12, 13 or 14 wherein said crankshaft has a raised section and said first engaging section is a recess formed in said raised section, said recess having a side opening, whereby said one end portion of said coil spring is insertable into said recess at least partly through said side opening for establishing engagement between said one end of said coil spring and said first engaging section.

16. The crankshaft assembly of Claim 15 wherein said one end portion of said coil spring extends substantially in parallel with the rotating axis of said crankshaft and said recess generally converges in width along the rotating axis of said crankshaft from said side opening.

17. The crankshaft assembly of Claim 15 wherein said one end portion of said coil spring extends substantially obliquely with respect to the rotating axis of said crankshaft, and said recess has a substantially uniform width and extends generally in parallel with the rotating axis of said crankshaft from said side opening.

18. The crankshaft assembly of any one of Claims 12 through 17 wherein said second engaging section is a hole provided in said pusher member, and said the other end portion of said coil spring is insertable into said hole at least partly for establishing engagement between said the other end of said coil spring and said second engaging section.

0070516

# F I G . I

# FIG. 2

0070516

FIG.3

# FIG.4

# FIG.5

# FIG.6

# FIG.7

FIG.8

FIG.9

FIG.10